# EUROPEAN PATENT SPECIFICATION

(11) **EP 1 698 825 B1**
(45) Date of publication and mention of the grant of the patent: **21.05.2008**
(21) Application number: 04798228.5
(22) Date of filing: 12.11.2004
(51) Int. Cl.: F21V 17/10, F21V 21/00, F21V 31/00

(54) **IMPROVED LIGHT**
VERBESSERTES LICHT
LUMINAIRE PERFECTIONNE

(30) Priority: 25.11.2003 ES 200302718 U
(43) Date of publication of application: 06.09.2006
(73) Proprietor: ROS CASANOVAS, Juan, E-08211 Castellar Del Valles (ES)
(72) Inventor: ROS CASANOVAS, Juan, E-08211 Castellar Del Valles (ES)
(74) Representative: Toro Gordillo, Ignacio Maria
(86) International application number: PCT/ES2004/000501
(87) International publication number: WO 2005/052442

(56) References cited:
- DE-U- 1 793 392
- FR-A1- 2 288 273
- GB-A- 1 395 144

## Description

### Object of the Invention

The present invention refers, as its title indicates, to a light of the type used as street furniture and having a casing intended for being fixed to a support element and for containing several usual functional elements, such as: optical groups, active parts, etc.

### Background of the Invention

There are currently several types of lights in the market used as street furniture in street lighting.

These lights generally have an upper body or cup which is fixed to a suitable support, be it of post, wall or any other type, by means of an arm, said cup being closed at its lower end by means of a cover made of a translucent material. In this kind of lights the functional elements are housed and fixed in the upper body so that, in order to carry out both the initial assembly and subsequent repair or maintenance operations, it is necessary to access the inside of said cup through the lower opening, by removal of the translucent body, which apart from being especially uncomfortable for the workers poses a significant risk of falling of both the tools used for performing the repair tasks and those components to be replaced.

In order to provide them with a shape harmonising with the surroundings, these lights have a fixed configuration posing different problems, such as preventing the assembly inside of them of different reflectors according to the type of lighting desired in each case, the impossibility of changing the transition or fixing means of the light to a suitable supporting element (wall, post, etc.), and preventing that a change in the light design may be carried out. Currently, therefore, when one of these modifications is desired to be carried out so as to change either the type of lighting provided by the light or the external appearance thereof, it is necessary to remove the existing lights and place new lights, which implies a significant cost.

French invention patent FR-A1-228873, of Eclaraige Technique, is known which describes a light formed by two frames which are joined by a joint allowing its opening and closing for accessing the inside without requiring any disassembly. This light has the light projecting window or tulips attached to the lower frame and a closing hood and trim attached to the upper frame. However, the constitution of this light still has the inner sub-assemblies and components, such as the reflector, connectors, light bulbs and the like in the upper body, which still involves a considerably problem for accessing and handling it, though said light can now be more easily opened and closed.

German utility model DE-1793392U, of Signalbau Huber Muenchen KG, is also known which describes a light of the type described comprising two hinged half-casings or bodies, the side opposite to the hinge being suitably formed so as to be directly held on the support arm forming the grip opening. This system has leak-tightness problems as well as with the safe closure of the system, though it is easy to assemble and disassemble as a whole.

Invention patent GB 1395144 of Philips Electronic and Associated Industries is also known, which describes a closure system between the upper body and the lower body of the light by means of hinged clamps, such that the contour of the lower body is covered by the perimetral contour of the upper body, preventing the entrance of water.

Therefore, the object of the present invention is the development of a light which, from a reduced number of fixed parts, allows the assembly of interchangeable parts in order to provide it with a different appearance as well as the possibility of changing the optical subassemblies, by applying reflectors with different flow distributions, in order to obtain a more suitable lighting in each case and to allow the adaptation of different transitions or supports to the light for its assembly on different supporting elements.

### Description of the Invention

According to the invention the light object of the present invention basically comprises a lower body of an inverted, substantially frustoconical configuration and a hollow upper body of a substantially frustoconical configuration on which several interchangeable hoods or covers which close said upper body and consequently the light can be assembled.

Said lower body internally houses the usual functional elements of the light such as optical groups, active parts, etc., said lower body being open at its upper area and being provided on its lower base with an offset circular window through which the light is projected outside.

The upper body, which serves as protection of the aforementioned functional components, is assembled on the lower body by means of a hinge allowing its folding between a lower closed position, in which said upper body contacts the lower body, and an upper opening position, in which it allows the access from the upper area to the lower body and the different functional elements housed inside of it.

A first advantage of this light is that the access to the functional components housed in the lower body is performed through the upper area of the latter, notably facilitating the tasks of the workers both during the initial assembly and in the subsequent repair or maintenance operations.

Furthermore, this upper access practically eliminates the risk that the tools or components used by the workers may fall down causing physical and material damage.

Another one of the particularities of this invention is that it allows to couple a great variety of hoods or covers on the upper body in a fast and simple manner in order to provide the light with an outer appearance in accordance with the urban atmospheres and the application supports, keeping the aforementioned upper and lower bodies intact and integral, as well as the usual functional components of the light.

According to the invention the light has means for fixing the upper body and the lower body in a closed position, and means independent from the former for fixing the hood or cover to be used in each case on the upper body.

Another one of the advantages of the present invention is that the lower body, as a result of its frustoconical profile, allows adapting on its generatrix and all its perimeter several fixing and transition devices to establish the joining of lights with supports of different types, meeting the demands required by the design of the light point, that is, the assembly formed by the support and the light.

Another one of the advantages the structure of this light presents, regarding its versatility, is the possibility of changing the optical subassemblies once the light point is installed, that is, the required supports, light, and transition elements, by applying reflectors of symmetrical or asymmetrical flow distribution in different coordinate axes, placing the lamps therein in those positions providing the greatest possible performance, being able to achieve those lighting parameters which prove to be most suitable according to the areas or spaces to be illuminated. This allows that this light may provide, by means of the assembly of suitable optical subassemblies, the lighting of different areas in order to obtain the most convenient type of lighting in each case.

According to this invention the upper body has a slightly larger diameter at its base than the upper opening of the lower body, which carries out, in the light closed position, a peripheral closing therearound.

It has likewise been provided for the upper body to have in the upper hood or cover coupling area a peripheral rim, slightly recessed and provided with radial holes for the assembly of the elements of fixing of the cover or hood to said upper body. A peripheral overlap of the cover on the upper body is thus achieved and also of the upper body with respect to the lower body, providing the suitable protection from atmospheric agents to the functional elements housed inside the light.

### Description of the Drawings

In order to complement the description being made and for the purpose of aiding in the understanding of the features of the invention, a set of drawings is attached to the present specification in which, with an illustrative and non-limiting character, the following has been shown:
Figure 1 shows an elevational view of an embodiment example of the light object of the present invention, in which the casing has been shown in elevation with the upper body in the closed position and sectioned along a vertical middle plane.
Figure 2 shows a similar view to the previous, in which the upper body has been shown in the opening position.

### Preferred Embodiment of the Invention

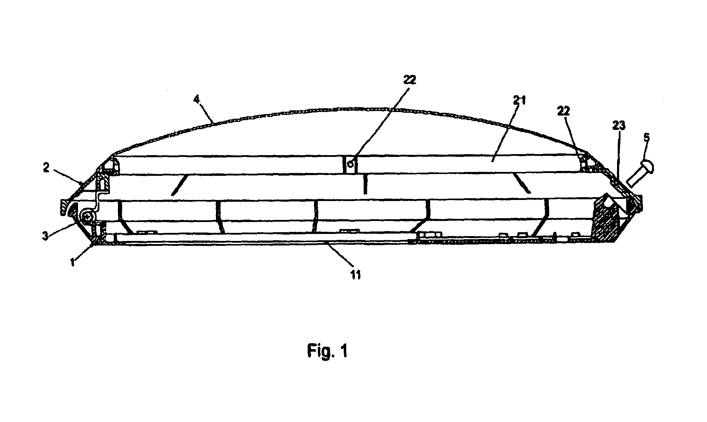

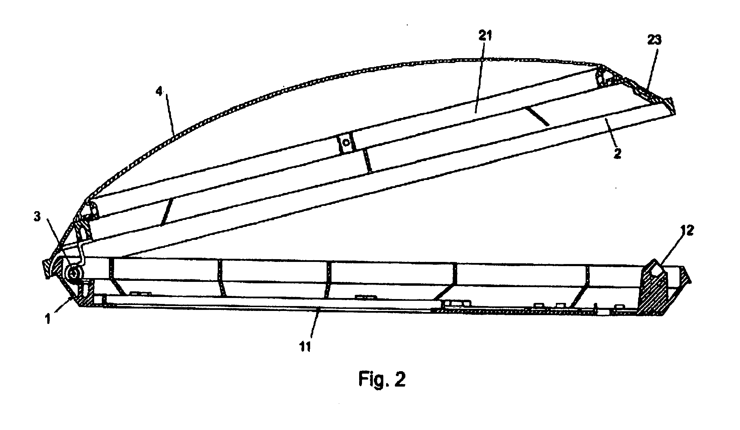

As can be seen in the figures referred to, the casing comprises a lower body (1) and an upper body (2) of frustoconical shape, shaped in aluminium casting and joined with one another by means of a hinge (3) allowing the folding of the upper body between a lower closed position, shown in Figure 1, and an upper opening position, shown in Figure 2.

In this embodiment example, peripherally the upper body (2) has on its upper opening a recessed peripheral rim (21) for the assembly of a cover or hood (4) which closes it on top and having the purpose of protecting the usual functional elements of the light that will be assembled inside the lower body (1) and which have not been shown due to being conventional.

As mentioned, the upper cover or hood (4) can have different configurations provided it has a lower opening suitable for its coupling on the peripheral rim (21) of said upper body. In order to fix the hood (4) to the upper body (2) it has been provided for said peripheral rim (21) to have radial openings (22) for the assembly of the corresponding screws or fixing elements.

The folding possibility of the upper body (2) towards the opening position, shown in Figure 2, allows a comfortable access of the workers to the functional elements, both during the initial assembly and when carrying out subsequent maintenance or repair tasks.

In turn, the lower body (1) has at its base an offset circular window (11) through which the light generated by the lighting elements will be projected outwards.

In order to carry out the retention of the upper body (2) in the closed position with respect to the lower body (1), it has been provided for said lower body (1) to have inside of it an appendix with a threaded opening (12) and for the upper body (2) to have, in a position facing said opening (12), a passage (23) for the assembly of a retaining screw (5) which, when introduced in the threaded opening (12), tightens the upper body (2) against the lower body (1).

The frustoconical configuration of the lower body (1) allows fixing in any point of its periphery a transition element intended to allow fixing the light to any kind of support.

Once the nature of the invention has been sufficiently described, as well as a preferred embodiment example, it is recorded for the appropriate purposes that the materials, shape, size, and arrangement of the described elements may be modified provided this does not imply an alteration of the essential features of the invention which are claimed below.

## Claims

1. A light of the type of those used as street furniture and having a casing intended tor being fixed to a support element and containing the functional elements such as: optical groups, active parts, etc., comprising:
- a lower body (1) with a substantially inverted frustoconical 1 configuration, open at its upper base and provided in its lower base with an offset circular window for projecting light outside, said lower body (1) housing the functional elements;
- a hollow upper body(2), with a substantially frustoconical configuration,which is assembled on the lower body(1) by means of a hinge(3) allowing its folding between a closed position and an opening position;
- an interchangeable cover or hood (4) intended fur being fixed on the upper body (2), carrying out the closing of its upper opening;
- and means fur fixing the upper body (2) and the lower body (1) in the light closed position,
**characterised in that** the lower body (1) internally comprises the functional elements of the light, such as optical groupes, active parts and the like, said lower body (1) being open at its upper area, allowing access from the upper area to the functional elements housed in said lower body (1); and **in that** the upper body(2) has in the upper hood or cover (4) coupling area a slightly recessed perimetral rim (21) and provided with radial holes (22) for coupling the upper hood or cover (4) placed externally to protect the inner elements from atmospheric agents; *and in having means for fixing the hood (4) on the upper body (2).*

## Patentansprüche

1. Leuchte von der Art, wie sie als städtisches Mobiliar verwendet werden, und die über ein Gehäuse verfügen, das dazu bestimmt ist, an einem Trägerelement befestigt zu werden, und die verschiedenen Funktionselemente, wie optische Gruppen, aktive Teile etc. zu beinhalten, die Folgendes umfasst:
- einen unteren Körper (1) mit inverser, leicht kegelstumpfer Ausbildung, die an ihrem oberen Boden offen ist, und an ihrem unteren Boden mit einem kreisförmigen außermittigen Fenster zur Projektion des Lichts nach außen versehen ist, wobei der genannte untere Körper (1) die Funktionselemente aufnimmt;
- einen oberen Hohlkörper (2) mit leicht kegelstumpfer Ausbildung, die auf dem unteren Körper (1) durch ein Scharnier (3) eingebaut ist, das sein Umklappen zwischen einer Verschlussstellung und einer Öffnungsstellung ermöglicht; eine austauschbare Abdeckung oder Haube (4), die dazu bestimmt ist, auf dem oberen Körper (2) befestigt zu werden, wobei sie den Verschluss seiner oberen Öffnung bewerkstelligt;
- und Mittel zur Befestigung des oberen Körpers (2) und des unteren Körpers (1) in der Verschlussstellung der Leuchte,
**dadurch gekennzeichnet, dass** der untere Körper (1) im Inneren die eigenen Funktionselemente der Leuchte, wie optische Gruppen, aktive Teile und andere umfasst, wobei der genannte untere Körper (1) an seinem oberen Bereich offen ist, wobei er den Zugriff von dem oberen Bereich auf die im genannten unteren Körper (1) aufgenommenen Funktionselemente ermöglicht; und dass der obere Körper (2) im Kopplungsbereich der oberen Haube (4) oder Abdeckung eine Randschulter (21) aufweist, die leicht vertieft und mit radialen Kopplungslöchern (22) der äußerlich eingesetzten oberen Haube (4) oder Abdeckung versehen ist, um die inneren Elemente vor den atmosphärischen Faktoren zu schützen; und dass er Mittel zur Befestigung der Haube (4) auf dem oberen Körper (2) besitzt.

## Revendications

1. Luminaire, du type employé comme mobilier urbain et disposant d'une carcasse destinée à se fixer à un élément de support et contenir les divers éléments fonctionnels, tels que: groupes optiques, parties actives, etc. comprenant :
- un corps inférieur (1) de configuration sensiblement tronconique renversée, ouverte par sa base supérieure et pourvue à sa base inférieure d'une fenêtre circulaire décentrée pour la projection de la lumière à l'extérieur, ledit corps inférieur (1) logeant les éléments fonctionnels ;
- un corps supérieur (2) creux, de configuration sensiblement tronconique, lequel est monté sur le corps inférieur (1) au moyen d'une charnière (3) permettant son rabattement entre une position de fermeture et une position d'ouverture ; -une couverture ou capot (4) rechangeable destinée à se fixer sur le corps supérieur (2), en réalisant la fermeture de son embouchure supérieure ;
- et des moyens pour la fixation du corps supérieur (2) et du corps inférieur (1) à la position de fermeture du luminaire,
**caractérisé en ce que** le corps inférieur (1) comprend intérieurement les éléments fonctionnels propres du luminaire, tels que des groupes optiques, parties actives et d'autres, ledit corps inférieur (1) se trouvant ouvert par sa zone supérieure, en permettant l'accès depuis la zone supérieure aux éléments fonctionnels logés à l'intérieur dudit corps inférieur (1) ; et **en ce que** le corps supérieur (2) présente sur la zone d'accouplement du capot (4) ou couverture supérieure un rebord périmètral (21), légèrement en avant et pourvu d'orifices radiaux (22) d'accouplement du capot (4) ou couverture supérieure embouchée extérieurement pour protéger les éléments intérieurs des agents atmosphériques ; et **en ce qu'**il possède des moyens pour la fixation du capot (4) sur le corps supérieur(2).
